# EUROPEAN PATENT SPECIFICATION

(11) **EP 0 837 767 B1**
(45) Date of publication and mention of the grant of the patent: **14.03.2001**
(21) Application number: 96922065.6
(22) Date of filing: 08.07.1996
(51) Int. Cl.: B29C 65/00, B65D 88/16

(54) **METHOD FOR FIXING A FIRST CONSTRUCTION MADE OF A PLASTIC MATERIAL TO A SECOND CONSTRUCTION MADE OF A PLASTIC MATERIAL**
VERFAHREN ZUM BEFESTIGEN VON EINEM KUNSTSTOFFELEMENT AN EINEM ANDEREN KUNSTSTOFFELEMENT
PROCEDE DE FIXATION D'UN PREMIER ELEMENT EN MATIERE PLASTIQUE SUR UN SECOND, EGALEMENT EN MATIERE PLASTIQUE

(30) Priority: 11.07.1995 FI 953392
(43) Date of publication of application: 29.04.1998
(73) Proprietor: UPM-Kymmene Oy, 00170 Helsinki (FI)
(72) Inventor: KOSKINEN, Erkki, FIN-28360 Pori (FI); NYMAN, Per, FIN-28400 Ulvila (FI)
(74) Representative: Salonen, Esko Tapani
(86) International application number: FI9600400
(87) International publication number: WO9702943

(56) References cited:
- EP-A- 0 505 068
- DE-B- 2 145 870

## Description

The invention concerns a method for fixing a first construction made of a plastic material to a second construction made of a plastic material.

For example, in unit-load sacks, inner sacks made of a plastic material, as a rule of polyethylene, are used. With respect to the prior art, reference is made to the *FI Patent No. 90,331,* in which a unit-load package meant for bulk goods is described, which package consists of an inner package and an outer package. The inner package is an inner sack made of a flexible material and provided with a support structure, which sack is placed on a base for the time of filling with bulk goods, preferably by suspending or supporting the sack above the base. The outer package is an outer package which surrounds the inner package and the base tightly, which is made of a plastic material, and which provides adequate stability.

In the manufacture of the inner sack described above, in principle, an inner ring has to be fixed to an outer ring. In the prior art, this has been made so that two rings of different lengths are fitted one inside the other and, after that, the rings are fixed to one another by means of seaming devices by seaming through two material thicknesses. It is a drawback of this solution that fitting of two rings of different lengths inside one another is relatively difficult and automation is complicated as the length of the inner sack is more than 3.5 metres.

From the prior art, a solution is also known in which the frame of the inner sack is made of two plane films, to which possible cover and bottom constructions are fixed in a separate step. In such a case, the outer film is provided with pleats or folds fitted with a certain spacing. The manufacture of the frame of the inner sack takes place so that two plane films are seamed together in the cross direction of the machine, after which the ring-shaped construction is formed by means of a vertical seam. It is a drawback of this prior-art solution that the seamed blank is not yet a finished product, but, in order to provide a finished product, one more separate working step is required, i.e. the fixing of the bottom and of the top to the frame.

*EP-A-0 505 068* discloses a method for seaming a first construction consisting of two plastic zipper strips to a second construction consisting of a center folded thermoplastic film, whereby the two plastic zipper strips are placed between the film faces of the second construction, so that during seaming, there are four material layers placed one above the other, and whereby the outer faces of the zipper strips are seamed to the film faces of the second construction, but the inner faces of the zipper strips are not fixed to one another by seaming, an intermediate piece preventing formation of non-desirable seams between the zipper strips.

The object of the invention is to provide an improvement over the prior-art methods. It is a more specific object of the invention to provide a method which permits fixing of a first construction made of a plastic material to a second construction made of a plastic material in one working step in the same machine into a finished product.

The objectives of the invention are achieved by means of a method according to claim 1.

By means of the method in accordance with the invention, a number of significant advantages are obtained. By using the method in accordance with the present invention, for example, the inner sack of a unit-load sack can be manufactured in one machine as one step into a finished sack. In the method in accordance with the invention, the inner ring can be easily placed between two plane films or between a hose film that has been opened at the side. In the method in accordance with the invention, the seaming process itself is also quicker than in the prior-art methods.

In a preferred embodiment of the invention, the inner film is chosen so that the outer face of the inner film is readily seamable and the inner face of the inner film poorly seamable, respectively. In this way it is ensured that, in the seaming process, all of the four film layers placed one above the other are not seamed together.

The invention will be described in detail with reference to a preferred embodiment of the invention illustrated in the figures in the drawings, the invention being, yet, not supposed to be confined to said embodiment alone.

Figure 1 is a schematic illustration of a prior-art seaming method.

Figure 2 is a schematic illustration of a second prior-art seaming method.

Figure 3 is a schematic illustration of a preferred embodiment of the seaming method in accordance with the invention.

Figure 4 is a schematic illustration of a second preferred embodiment of the seaming method in accordance with the invention.

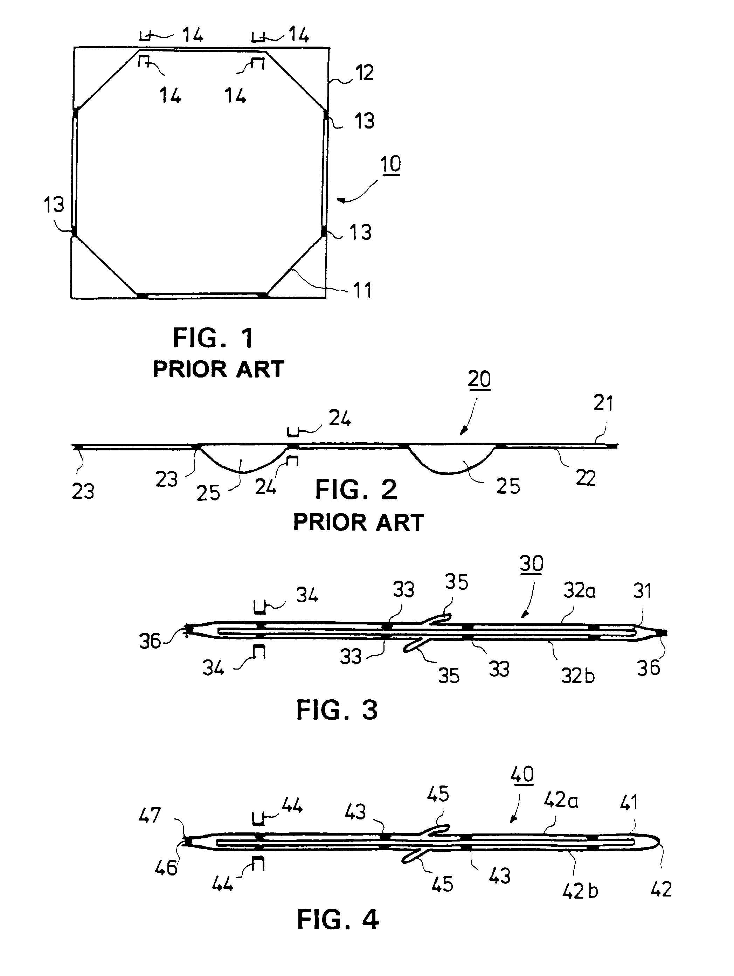

In the prior-art seaming method shown in Fig. 1 the inner sack 10 is manufactured as follows. The inner ring 11 and the outer ring 12 are placed one inside the other, and the seaming devices 14 form the seams 13 in the way shown in Fig. 1. The most important drawback of this prior-art method is the fitting of two ring-shaped constructions of different lengths one inside the other.

In the prior-art seaming method shown in Fig. 2, the inner sack 20 is made of two plane films, i.e. not out of an inner ring and an outer ring. In Fig. 2, the inner film 21 has been placed on the top and the outer film 22 on the bottom. The seaming devices 24 form the seams 23 at the locations shown in Fig. 2. It should be noticed in particular that the outer film 22 is provided with pleats or folds 25 placed at a certain distance from one another. In Fig. 2, the manufacture of the inner sack 20 takes place in the cross direction of the machine in respect of the seaming. After this, a separate additional working step is required in order to produce a finished inner sack, i.e. formation of a ring by means of vertical seams (not shown). It is the most important drawback of this prior-art method that the product, i.e., for example, the inner sack, cannot be manufactured completely by means of one working step and by means of one machine.

In Fig. 3 the product in accordance with the invention composed of a first construction made of a plastic material and of a second construction made of a plastic material is denoted generally with the reference numeral 30. In this embodiment, the product 30 is the inner sack of a unit-load sack. The inner sack 30 is formed by placing an inner ring 31 between two plane films 32a and 32b. Into the plane films 32a and 32b longitudinal folds 35 have been formed. The constructions 31 and 32a and 32b are seamed by means of seaming devices 34, whereby the seams 33 are formed. It should be noticed in particular that in the method in accordance with the invention the seams 33 are formed in the desired way so that all of the four film layers are not fixed together by seaming. Finally, seams 36 are still formed at the outer edges of the plane films 32a and 32b, whereby the outer ring of the inner sack 30 is formed.

The inner film 31 should preferably be chosen so that the outer face of the inner film 31 is readily seamable and the inner face poorly seamable. In such a case the plane films 32a and 32b are fixed to the inner ring 31 by seaming in the correct way.

In the embodiment shown in Fig. 4 the product composed of a first construction made of a plastic material and of a second construction made of a plastic material is denoted generally with the reference numeral 40. Also in this embodiment, the product 40 is the inner sack of a unit-load sack. The inner sack 40 is formed by placing an inner ring 41 between a hose film 42 that has been opened at one edge 47. Also in this embodiment, the inner ring 41 is placed between two film faces 42a and 42b. Longitudinal folds 45 have been formed into the film faces 42a and 42b. The constructions 41 and 42a and 42b are seamed by means of seaming devices 44, whereby the seams 43 are formed. Finally, a seam 46 is formed at one outer edge of the film faces 42a and 42b, i.e. at the opened edge 47, whereby the outer ring of the inner sack 40 is formed.

The seaming method in accordance with the invention is highly advantageous for the manufacture of products made of a plastic material, such as, for example, inner sacks of unit-load sacks. The seaming process is very rapid, and the finished product can be produced by means of one machine in one working step without need of any additional working steps. Of course, the method in accordance with the invention can be applied to fixing together of a variety of constructions made of different plastic materials.

Above, just one preferred embodiment of the invention has been described, and it is obvious to a person skilled in the art that numerous modifications can be made to said embodiment within the scope of the inventive idea defined in the accompanying patent claims.

## Claims

1. A method for fixing a first construction (31,41) made of a plastic material to a second construction (32a,32b;42,42a,42b) made of a plastic material, by means of seaming devices (34,44), which form seams (33,43) at desired locations such that the outer face of the first construction (31,41) is fixed by seaming to the film faces that form the second construction (32a,32b;42a,42b), but the inner faces of the first construction (31,41) are not fixed to one another by seaming, whereby the first construction (31,41) is placed, in its ring-shaped form, between the film faces (32a,32b;42a,42b) that form the second construction, so that, during seaming, there are at least four material layers placed one above the other, and whereby the first construction (31,41) is fixed to the second construction (32a,32b; 42a,42b) by seaming at the desired locations by means of seams (33,43) without using, during seaming, any intermediate piece that prevents formation of non-desirable seams.

2. A method as claimed in claim 1, **characterized** in that seams (36,46) are formed at least at one outer edge of the film faces (32a,32b;42a,42b) that form the second construction.

3. A method as claimed in claim 1 or 2, **characterized** in that longitudinal folds (35,45) are formed into the film faces (32a,32b;42a,42b) that form the second construction.

4. A method as claimed in any of the claims 1 to 3, **characterized** in that the plastic material of the first construction (31,41) is chosen so that its outer face is readily seamable and its inner face poorly seamable.

5. A method as claimed in any of the claims 1 to 4, **characterized** in that the product (30,40) composed of the first construction (31,41) and of the second construction (32a,32b;42a,42b) is the inner sack of a unit-load sack, in which inner sack the first construction (31,41) is fitted to operate as a support structure of the second construction (32a,32b;42,42a,42b) constituting the inner sack.

6. A method as claimed in any of the claims 1 to 5, **characterized** in that the second construction (32a,32b) is composed of plane films.

7. A method as claimed in any of the claims 1 to 5, **characterized** in that the second construction (42,42a,42b) is composed of a hose film (42) which has been opened at one edge (47) and whose faces (42a,42b) form the film faces.

## Patentansprüche

1. Verfahren zum Befestigen eines aus einem Kunststoffmaterial hergestelltem ersten Bauteils (31, 41) an einem aus einem Kunststoffmaterial hergestelltem zweiten Bauteil (32a, 32b; 42, 42a, 42b) mittels Nahtbildungsvorrichtungen (34, 44), die Nähte (33, 43) an erwünschten Stellen derart bilden, dass die Außenseite des ersten Bauteils (31, 41) durch ein Nahtbilden an den Filmseiten befestigt wird, die das zweite Bauteil (32a, 32b; 42a, 42b) bilden, jedoch die Innenseiten des ersten Bauteils (31, 41) nicht aneinander durch das Nahtbilden befestigt sind, wodurch das erste Bauteil (31, 41) in seiner ringförmigen Form zwischen den das zweite Bauteil bildenden Filmseiten (32a, 32b; 42a, 42b) so angeordnet ist, dass während des Nahtbildens zumindest vier übereinander angeordnete Materiallagen vorhanden sind, und wodurch das erste Bauteil (31, 41) an dem zweiten Bauteil (32a, 32b; 42a, 42b) durch ein Nahtbilden an den erwünschten Stellen mittels der Nähte (33, 43) befestigt wird, ohne dass während des Nahtbildens irgendein Zwischenstück verwendet wird, das das Bilden von nicht erwünschten Nähten verhindert.

2. Verfahren gemäß Anspruch 1,
**dadurch gekennzeichnet, dass**
Nähte (36, 46) zumindest an einer Außenkante der Filmseiten (32a, 32b; 42a, 42b) ausgebildet werden, die das zweite Bauteil bilden.

3. Verfahren gemäß Anspruch 1 oder 2,
**dadurch gekennzeichnet, dass**
Längsfalten (35, 45) in den Filmseiten (32a, 32b; 42a, 42b) ausgebildet werden, die das zweite Bauteil bilden.

4. Verfahren gemäß einem der Ansprüche 1 bis 3,
**dadurch gekennzeichnet, dass**
das Kunststoffmaterial des ersten Bauteils (31, 41) so gewählt wird, dass seine Außenseite ohne weiteres durch eine Naht verbindbar ist und seine Innenseite schlecht durch eine Naht verbindbar ist.

5. Verfahren gemäß einem der Ansprüche 1 bis 4,
**dadurch gekennzeichnet, dass**
das Erzeugnis (30, 40), das aus dem ersten Bauteil (31, 41) und dem zweiten Bauteil (32a, 32b; 42a, 42b) besteht, der Innensack eines Einheitslastsackes ist, wobei in dem Innensack das erste Bauteil (31, 41) eingepasst ist, um als ein Stützaufbau des den Innensack bildenden zweiten Bauteils (32a, 32b; 42, 42a, 42b) zu wirken.

6. Verfahren gemäß einem der Ansprüche 1 bis 5,
**dadurch gekennzeichnet, dass**
das zweite Bauteil (32a, 32b) aus ebenen Filmen besteht.

7. Verfahren gemäß einem der Ansprüche 1 bis 5,
**dadurch gekennzeichnet, dass**
das zweite Bauteil (42, 42a, 42b) aus einem Schlauchfilm (42) besteht, der an einem Rand (47) offen ist und dessen Seiten (42a, 42b) die Filmseiten bilden.

## Revendications

1. Procédé pour fixer une première construction (31, 41) en matière plastique à une deuxième construction (32a,32;42,42a,42b) en matière plastique à l'aide de dispositifs de couture (34,44) qui forment des coutures (33,43) à des emplacements voulus de façon que la face extérieure de la première construction (31.41) soit fixée par des coutures aux faces de films qui forment la deuxième construction (32a,32b;42a,42b), mais les faces intérieures de la première construction (31,41) ne sont pas fixées l'une à l'autre par des coutures, grâce à quoi la première construction (31,41) est placée, sous sa forme annulaire, entre les faces (32a,32b;42a;42b) de films qui forment la deuxième construction, de façon que pendant la réalisation des coutures il y ait au moins quatre couche de matière superposées les unes aux autres, et grâce à quoi la première construction (31,41) est fixée à la deuxième construction (32a,32b;42a,42b) par des coutures (33,43) réalisées aux emplacements voulus sans utiliser, pendant la réalisation des coutures, une pièce intermédiaire empêchant la formation de coutures non souhaitables.

2. Procédé selon la revendication 1, caractérisé en ce que des coutures (36,46) sont formées au moins sur un bord extérieur des faces (32a,32b;42a,42b) de films qui forment la deuxième construction.

3. Procédé selon la revendication 1 ou 2, caractérisé en ce que des plis longitudinaux (35, 45) sont formés dans les faces (32a,32b;42a,42b) de films qui forment la deuxième construction.

4. Procédé selon l'une quelconque des revendications 1 à 3, caractérisé en ce que la matière plastique de la première construction (31, 41) est choisie de façon que sa face extérieure soit facile à coudre et que sa face intérieure soit difficile à coudre.

5. Procédé selon l'une quelconque des revendications 1 à 4, caractérisé en ce que le produit (30,40) composé de la première construction (31,41) et de la deuxième construction (32a,32b;42a,42b) est le sac intérieur d'un sac pour charge isolée, sac intérieur dans lequel la première construction (31,41) est installée pour servir de structure de support de la deuxième construction (32a,32b;42,42a,42b) constituant le sac intérieur.

6. Procédé selon l'une quelconque des revendications 1 à 5, caractérisé en ce que la deuxième construction (32a,32b) est constituée par des films plans.

7. Procédé selon l'une quelconque des revendications 1 à 5, caractérisé en ce que la deuxième construction (42,42a,42b) est constituée par un film tubulaire (42) qui a été ouvert sur un bord (47) et dont les faces (42a,42b) forment les faces de film.
